# EUROPEAN PATENT SPECIFICATION

(11) **EP 0 787 271 B1**
(45) Date of publication and mention of the grant of the patent: **13.06.2001**
(21) Application number: 95940601.8
(22) Date of filing: 10.10.1995
(51) Int. Cl.: F21V 8/00, F21V 5/02

(54) **ILLUMINATION SYSTEM EMPLOYING AN ARRAY OF MULTI-FACETED MICROPRISMS**
BELEUCHTUNGSSYSTEM MIT EINER ANORDNUNG VON MEHRSEITIGEN MIKROPRISMEN
SYSTEME D'ECLAIRAGE UTILISANT UN RESEAU DE MICROPRISMES A MULTIFACETTES

(30) Priority: 11.10.1994 US 321368
(43) Date of publication of application: 06.08.1997
(73) Proprietor: Honeywell International Inc., Morristown, New Jersey 07962-2245 (US)
(72) Inventor: HOU, Janpu, Bridgewater, NJ 08807 (US); ZIMMERMAN, Scott, Moore, Basking Ridge, NJ 07920 (US); BEESON, Karl, Wayne, Princeton, NJ 08540 (US)
(74) Representative: Brunner, Michael John
(86) International application number: US9514272
(87) International publication number: WO9611358

(56) References cited:
- EP-A- 0 154 847
- EP-A- 0 292 159
- DE-A- 2 736 486
- US-A- 5 040 878
- US-A- 5 396 350
- IBM TECHNICAL DISCLOSURE BULLETIN, vol. 33, no. 9, February 1991 NEW YORK US, pages 261-262, XP 000109498 'high efficiency back light for lcd'

## Description

This invention relates generally to an optical illumination system for collimating light that provides for relatively high light transmission. More particularly, the invention is directed to an illumination system having a plurality of optical microprisms and microlenses for redirecting light removed from a non-collimated light source and providing either separately or in combination a non-diffuse light source and a substantially collimated light source.

A number of optical and illumination applications require the production of either a non-diffuse or a collimated light source which provides an efficient output of light. Typical problems encountered with collimated light sources include: 1) a non-uniform light distribution; 2) a lack of a controlled directional output of light; 3) inefficiencies with regard to the amount of the collimated light output versus the amount of the non-collimated light input; and 4) the lack of an efficient collimated light source in a compact design or narrow profile.

Accordingly, there exists a need in the optical and illumination arts to provide an illumination assembly that provides an energy efficient light source while maintaining a narrow profile.

The present invention is directed to an optical illumination system which provides either separately or in combination a non-diffuse light source and a substantially collimated light source (hereinafter referred to as a spatially directed light source) that is energy efficient. Additionally, this invention is directed to any lighting application that requires a low profile spatially directed light source.

US5396350 and US5428468, which have been granted in relation to the applications upon which the continuation-in-part priority document of this application was based, both disclose an illumination assembly for providing a spatially directed light source.

According to the present invention, there is provided an illumination assembly for providing a spatially directed light source, the illumination assembly having:
a light transmitting means for transporting light emanating from a first light source and including a first light accepting surface optically coupled to the first light source, wherein the light transmitting means; and
reflecting means for redirecting the light and having an array of microprisms each comprising:
   a light input surface optically coupled to the light transmitting means;
   a light output surface distal from the light input surface and having a surface area at least equal to the surface area of the light input surface;
   a first pair of opposed sidewalls disposed between and contiguous with the light input surface and the light output surface, at least one of the sidewalls forming a first tilt angle ϕ with respect to the normal of the surface of the light transmitting means;
   a second pair of opposed tilted sidewalls disposed between and contiguous with the light input surface and the light output surface; and
   wherein the light reflecting through the light transmitting means enters the microprisms through the light input surfaces, is redirected by the sidewalls and emerges through the light output surfaces as a spatially directed light source,
characterised by the at least one sidewall of the first pair comprising at least two planar reflective faces.

There are many illumination applications that can take advantage of such an illumination system employing such an arrangement of microprisms and microlenses. Such applications exist in the automotive industry, the aerospace industry and the commercial and residential markets. Some automotive applications, by way of example only and not intended to limit the possible applications include: low profile car headlights and taillights; low profile interior car lights such as reading lights and map lights; light sources for dashboard displays; backlights for flat panel navigation displays, flat panel auto TV screens and flat panel electronic instrument displays; traffic lights, and backlights for road signs. Illustrative examples in the aerospace industry include backlights for flat panel cockpit displays and flat panel TV screens in the passenger section of the aircraft; low profile reading lights and aircraft landing lights; and runway landing lights. Residential and commercial applications include low profile interior and exterior spotlights and room lighting with a high or a low degree of collimation, backlights for flat panel TV screens, LCD displays, such as computers, game displays, appliance displays, machine displays, picture phones, advertisement displays, light for show case displays and point-of-purchase displays.

Additional objects, advantages and novel features of the invention will be set forth in part in the description which follows, and in part will become apparent to those skilled in the art upon examination of the following or may be learned by practice of the invention. The advantages of the invention may be realized and attained by means of the instrumentalities and combinations particularly pointed out in the appended claims.

The above and other objects and advantages of this invention will be apparent on consideration of the following detailed description, taken in conjunction with the accompanying drawings, in which like reference characters refer to like parts throughout, and in which:
FIGURE 1 is an elevation view of an example of the type of illumination system to which the present invention relates;
FIGURE 1A is an exploded view of the example of Fig. 1;
FIGURE 1B is a side view of the example of Fig. 1;
FIGURE 2A-2C are embodiments of a single microprism specific for a single light source input type assembly according to the invention;
FIGURE 3 is a side view of a further embodiment;
FIGURES 4 and 4A are exploded views of a single microlens;
FIGURES 5A-5C are alternative shape embodiments of a single microprism for application with dual light source inputs;
FIGURES 6A and 6B are further alternative shape embodiments of a single microprism for application with dual light source inputs; and
FIGURE 7 is a side view of the embodiment of a still further embodiment.

The preferred embodiments of the present invention will be better understood by those skilled in the art by reference to the above figures. The preferred embodiments of this invention illustrated in the figures are not intended to be exhaustive or to limit the invention to the precise form disclosed. They are chosen to describe or to best explain the principles of the invention and its applicable and practical use to thereby enable others skilled in the art to best utilize the invention.

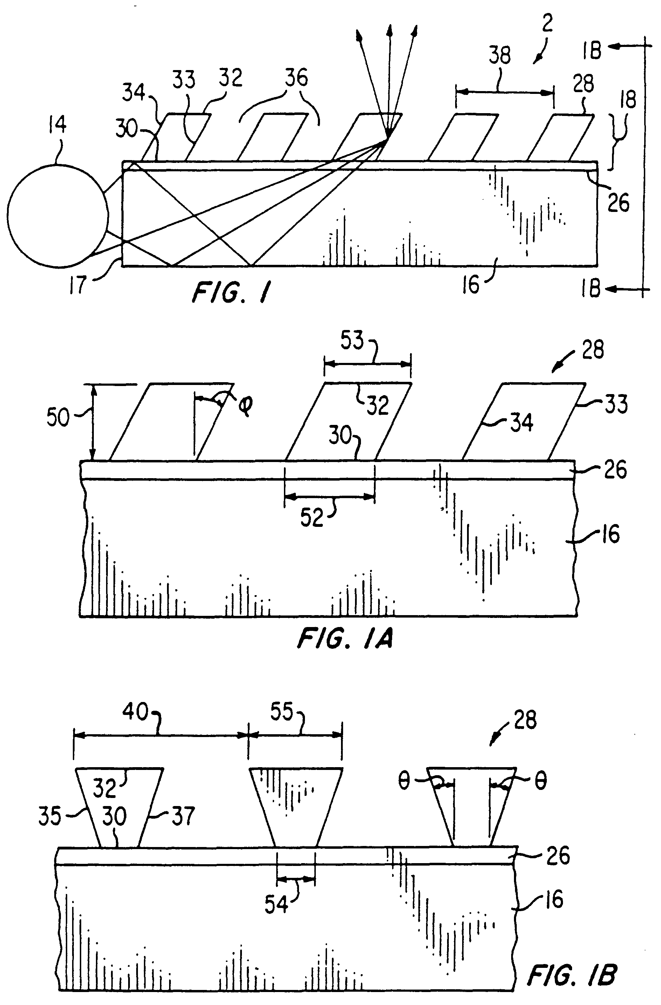

Figs. 1, 1A and 1B illustrate the type of illumination system 2 to which the present invention relates. This comprises a light generating means 14, a waveguide 16 having a light accepting surface 17 and a transparent reflecting means 18 in optical contact with waveguide 16. Examples of useful light generating means 14 include lasers, fluorescent tubes, light emitting diodes, incandescent lights, sunlight and the like which may also be combined with reflection means to increase the optical coupling. The waveguide 16 is made from any transparent material such as glass or polymer. In Fig. 1, light generating means 14 is optically coupled to waveguide 16, and reflecting means 18 is in contact with waveguide 16.

The reflecting means 18 comprises an optional adhesion promoting layer 26 and an array of microprisms 28. Light reflects through the waveguide 16 via total internal reflection (TIR) and enters each microprism 28 by way of light input surface 30, reflects off sidewalls 33, 34 and 37 and exits the microprism 28 through the light output surface 32 as a spatially directed light source.

Waveguide 16 is transparent to light within the wavelength range from about 400 to about 700 nm. The index of refraction of the waveguide 16 may range from about 1.40 to about 1.65. The most preferred index of refraction is from about 1.45 to about 1.60. The waveguide 16 may be made from any transparent solid material. Preferred materials include transparent polymers, glass and fused silica. Desired characteristics of these materials include mechanical and optical stability at typical operation temperatures of the device. Most preferred materials are glass, acrylic, polycarbonate and polyester.

Microprisms 28 can be constructed from any transparent solid material. Preferred materials have an index of refraction equal to or greater than waveguide and more preferably between about 1.40 and about 1.65. One method of manufacturing microprisms 28 includes injection moulding them. Materials useful in this method include polycarbonate, acrylic and poly(4-methyl pentene). Alternate methods of manufacture may include polymers formed by photo-polymerization of acrylate monomer mixtures composed of urethane acrylates and methacrylates, ester acrylates and methacrylates, epoxy acrylates and methacrylates, (poly) ethylene glycol acrylates and methacrylates and vinyl containing organic monomers. Useful monomers include methyl methacrylate, n-butyl acrylate, 2-ethylhexyl acrylate, isodecyl acrylate, 2-hydroxyethyl acrylate, 2-hydroxypropyl acrylate, cyclohexyl acrylate, 1,4-butanediol diacrylate, ethoxylated bisphenol A diacrylate, neopentylglycol diacrylate, diethyleneglycol diacrylate, diethylene glycol dimethacrylate, 1,6-hexanediol diacrylate, trimethylolpropane triacrylate, pentaerythritol triacrylate and pentaerythritol tetra-acrylate. Especially useful are mixtures wherein at least one monomer is a multi-functional monomer such as diacrylate or triacrylate, as these will produce a network of cross-links within the reacted photopolymer. The most preferred materials for microprisms 28 formed by photolithography are cross-linked polymers formed by photopolymerizing mixtures of ethoxylated bisphenol A diacrylate and trimethylolpropane triacrylate.

Microprisms 28 are separated by interstitial regions 36. The index of refraction of interstitial regions 36 must be less than the index of refraction of the microprism 28. Preferred materials for interstitial regions include air, with an index of refraction of 1.00 and fluoropolymer materials with an index of refraction ranging from about 1.16 to about 1.40. The most preferred material is air.

The optional adhesion promoting layer 26 is an organic material that is light transmissive and that causes the microprisms 28, however manufactured, such as formed from polymers, as for example photocrosslinked acrylate monomer materials or injection moulded polycarbonate, to adhere strongly to the waveguide 16. Such materials are well known to those skilled in the art. The thickness of the adhesion promoting layer 26 is not critical and can vary widely. In the preferred embodiment of the invention, adhesion promoting layer 26 is less than about 30 micrometres thick.

The microprisms may be arranged in any pattern on waveguide 16, such as in a square, rectangular or hexagonal pattern. The microprisms have a repeat distance 38 (Fig. 1) in the direction perpendicular to light accepting surface 17 and repeat distance 40 (Fig. 1B) in the direction parallel to light accepting surface 17. Repeat distances 38 and 40 may be equal or unequal and may vary widely depending on the resolution and dimensions of the display. In addition, the repeat distances 38 and 40 may vary across the surface of the waveguide 16 in order to compensate for a lowering of the light intensity inside waveguide 16 as the distance from light generating means 14 increases. This lowering of the light intensity is due to light removal by the other microprisms of the array.

The microprisms 28 are constructed to form a six-sided geometrical shape having a light input surface 30 preferably parallel with a light output surface 32, wherein the light output surface 32 is equal to or larger in surface area than the light input surface 30. Microprism 28 further comprises two pairs of oppositely disposed sidewalls 33, 34 and 35, 37, wherein each sidewall comprises a planar reflective face which is effective in reflecting and redirecting the light which is propagating through the waveguide 16. Preferably, the intersection of sidewall 33 with waveguide 16, or adhesion layer 26 thereon, forms a line that is perpendicular to the average direction of the light. For example, as shown in Fig. 1, the intersection of the sidewall 33 with the adhesion layer 26 forms a line parallel to the light accepting surface 17 and is therefore perpendicular to the average direction of the light travelling through the waveguide 16.

As shown in Fig. 1A, each microprism 28 is formed so that sidewall 33 forms a tilt angle ϕ to the normal of the surface of waveguide 16. The desired values of tilt angle ϕ range from about 15 degrees to about 50 degrees. More preferred values for tilt angle ϕ range from about 20 degrees to about 40 degrees. As will be obvious to those skilled in the art, tilt angle ϕ determines at which angle with respect to the normal of the light output surface the spatially directed light will emerge.

Referring to Fig. 1B, sidewalls 35 and 37 also form a tilt angle θ to the normal of the surface of waveguide 16. The desired values of tilt angle θ range from about 0 degrees to about 25 degrees. More preferred values for tilt angle θ range from about 2 degrees to about 20 degrees. Preferably, the tilt angles θ associated with sidewalls 35 and 37 are equal, but equal angles are not necessary.

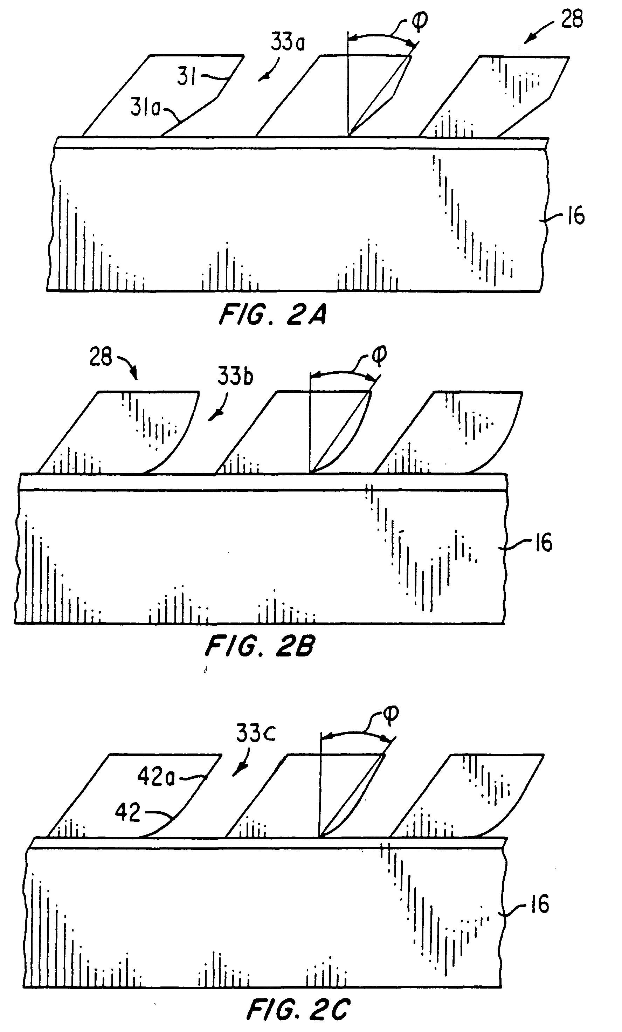

An example of an assembly according to the invention, is shown in Fig. 2A. In that example, at least one side wall of each microprism 28 comprises two or more planar reflective faces to improve the reflectivity of the microprism. Fig. 2A illustrates sidewall 33a having two planar faces 31 and 31a. However, the number of planar faces that form a sidewall may vary. Fig. 2B shows an alternative embodiment where at least one sidewall comprises multiple planar faces infinitesimally minute such that sidewall 33b is effectively arcuately shaped. Alternatively, in Fig. 2C, sidewall 33c comprises an effectively arcuate-shaped reflective surface 42 area and a planar reflective surface area 42a.

Referring again to Figs. 1A, 1B and 1C, the microprism 28 has a height 50 which may vary widely depending on the dimensions and resolution of the display. That is, smaller displays, such as laptop computer displays and avionics displays would have greatly reduced dimensions versus larger displays such as large screen, flat-panel televisions.

The microprism 28 has length dimensions 52 and 53. Length 52 corresponds to the light input surface 30 and length 53 corresponds to the light output surface 32. The length 53 can be equal to or greater than the length 52, and the lengths 52 and 53 may vary widely depending on the dimensions and resolution of the display. In addition, the length 52 may vary across the surface of the light transmitting means 16 in order to compensate for a lowering of the light intensity inside waveguide 16 as the distance from light generating means 14 increases. That is, microprisms 28 that are closer to the light generating means 14 may have a smaller dimension 52 than that of microprisms farther from the light generating means 14. This lowering of the light intensity is due to light removal by the other microprisms of the array. The maximum value for lengths 52 and 53 is less than the repeat distance 38 of Fig. 1.

Microprism 28 has width dimensions 54 and 55 where width 54 corresponds to the light input surface 30 and width 55 corresponds to the light output surface 32. Widths 54 and 55 may also vary widely depending on the dimensions and resolution of the display and are a function of tilt angle θ and height 50. In addition, the width 54 may vary across the surface of the light transmitting means 16 in order to compensate for a lowering of the light intensity inside waveguide 16 as the distance from light generating means 14 increases. The maximum value for widths 54 and 55 is less than the repeat distance 40. It is desirable that length dimension 52 be larger than width dimension 54. It is preferred that the ratio of length 52 to width 54 be in the range of 1.2:1 to 5:1. It is more preferred that the ratio be in the range of 1.5:1 to 3:1.

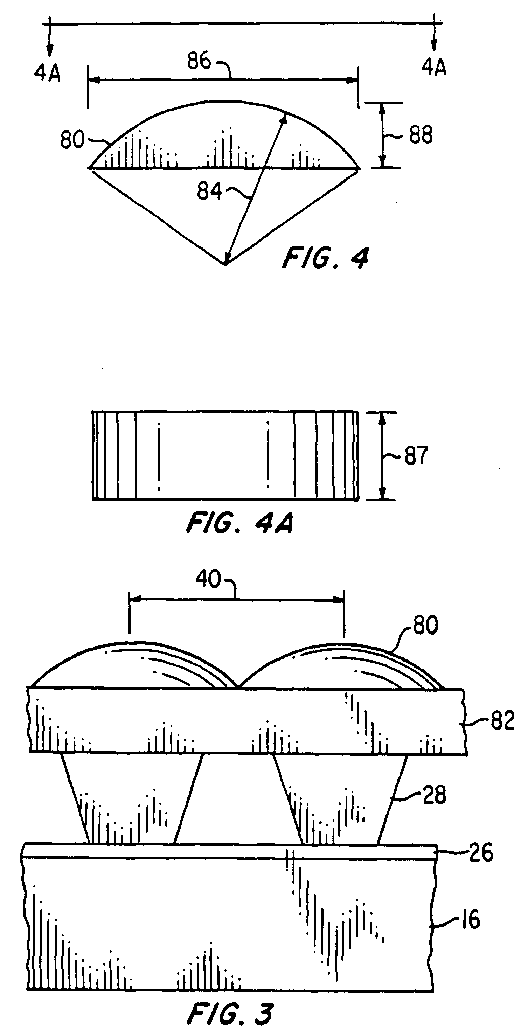

In an alternate embodiment, reflecting means 18 further comprises an array of microlenses 80 as shown in Fig 3. The microlenses 80 are optically coupled to the microprisms 28 and may be fabricated using the same techniques as described for microprisms 28. If the microlenses 80 are fabricated by photopolymerization, they are preferably made from the same monomers as those previously disclosed for the microprisms 28 and have a index of refraction equal to or substantially equal to the index of refraction of the microprisms 28. However, any transparent material may be used, as for example, those materials previously discussed. The centre-to-centre distance between microlenses directly correlates to the repeat distances 38 and 40 of the microprisms 28, that is, for every microprism 28 there exists a corresponding microlens 80 that aligns with the output surface 32 of each microprism 28.

A spacer 82 separates the microlenses 80 and the microprisms 28. The thickness of spacer 82 is optimized to cause light from microprisms 28 to be collimated by microlenses 80. The spacer 82 may be made from any transparent material. Preferred materials include transparent polymers, glass and fused silica. Preferably the spacer 82 has an index of refraction equal to or substantially equal to the index of refraction of the microprisms 28 and the microlenses 80. Desired characteristics of these materials include mechanical and optical stability at typical operation temperatures of the device. Most preferred materials are glass, acrylic, polycarbonate, polyester and photopolymerized acrylate monomers.

A single microlens 80 is shown in Fig. 4. The microlens can be either a spherical lens or an aspherical lens or an astigmatic lens. The footprint of a microlens 80 is not necessarily circular, but can be rectangular in shape, as shown in Fig. 4A, having a length 86 and width 87 that are respectively equal in length with repeat distances 38 and 40.

If microlens 80 is a spherical lens, the lens will have one curved surface having a radius of curvature 84. The radius of curvature can vary widely depending on the repeat distances 38 and 40 of the corresponding microprism array. In order that microlens 80 collect substantially all of the light directed out of waveguide 16 by microprism 28, the f-number of microlens 80 should be relatively small. The f-number values for microlens 80 can range from about 0.5 to about 4.0. More preferred values for the f-number range from about 0.6 to about 3.0.

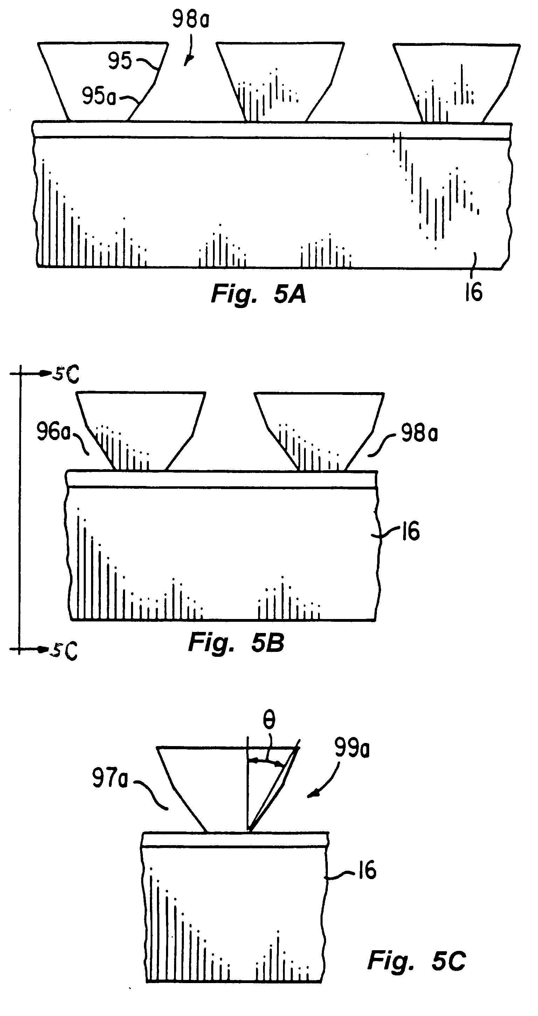

Fig. 5A illustrates a microprism sidewall 98a having two planar faces 95 and 95a. In one embodiment, sidewalls 96a, 98a, 97a and 99a may comprise at least two planar reflective faces as illustrated in Figs. 5B and 5C. Generally however, microprism 90 may have any combination of planar sidewalls and sidewalls having two or more planar faces.

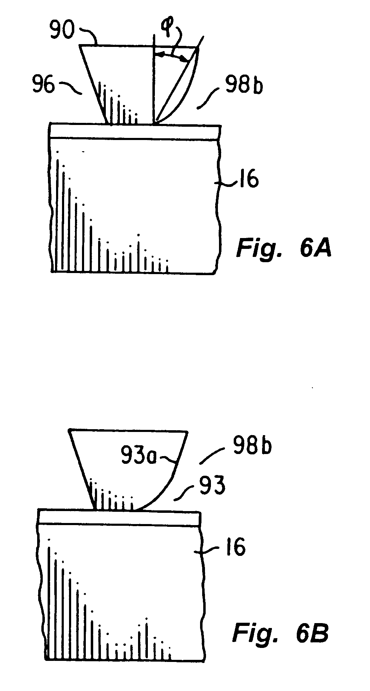

Figs. 6 and 6A show a further embodiment where at least one sidewall, for example 98b, comprises multiple planar faces infinitesimally minute such that sidewall 98b is arcuately shaped. Alternatively, sidewall 98b comprises an arcuate-shaped reflective surface area 93 and a planar reflective surface area 93a.

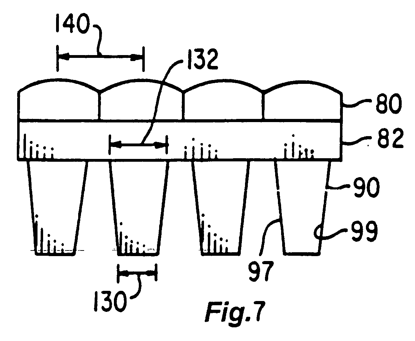

A still further embodiment of the invention, disclosed in Fig. 7, comprises an array of microlenses 80 optically coupled to microprisms 90. A spacer 82 separates the microlenses 80 from microprisms 90 as previously disclosed. The light emerges from each microprism 90 as a spatially directed light source and inputs into one or more microlenses. The light source is directed to two microlenses. The spatially directed light source emanating from the microprisms 90 is collimated by the microlenses 80 to provide a substantially collimated light pattern. The centre-to-centre distance between microlenses directly correlates to the repeat distances 138 and 140 of the microprisms 90. The length 86 (Fig. 4) of each microlens 80 aligns with respect to the microprism array so that equal distances overlap adjacent microprisms. The width 87 of each microlens aligns with respect to a single microlens as shown in Fig. 7.

Arrays of microprisms 28 and 90 and microlenses 80 can be manufactured by any number of techniques such as moulding, including injection and compression moulding, casting, including hot roller pressing casting, photopolymerization within a mould and photopolymerization processes which do not employ a mould. A preferred manufacturing technique would be one that allows the reflecting means 18 which comprises an array of microprisms 28 or 90, an array of microlenses 80 and a spacer 82 to be manufactured as a single integrated unit. An advantage of this technique would be the elimination of alignment errors between the array of microprisms and microlenses if the arrays were manufactured separately and then attached in the relationship described above.

## Claims

1. An illumination assembly for providing a spatially directed light source, the illumination assembly having:
a light transmitting means (16) for transporting light emanating from a first light source (14) and including a first light accepting surface (17) optically coupled to the first light source; and
reflecting means for redirecting the light and comprising an array of microprisms (90) each comprising:
a light input surface (30) optically coupled to the light transmitting means (16);
a light output surface (32) distal from the light input surface (30) and having a surface area at least equal to the surface area of the light input surface (30);
a first pair of opposed sidewalls (33,34) disposed between and contiguous with the light input surface (30) and the light output surface (32), at least one of the sidewalls (33,34) forming a first tilt angle ϕ with respect to the normal of the surface of the light transmitting means; and
a second pair of opposed tilted sidewalls (35,37) disposed between and contiguous with the light input surface (30) and the light output surface (32),
wherein the light reflecting through the light transmitting means (16) enters the microprisms (90) through the light input surfaces, is redirected by the sidewalls (33,34,35,37) and emerges through the light output surfaces (32) as a spatially directed light source,
characterised by the at least one sidewall of the first pair comprising at least two planar reflective faces (31,31a).

2. The illumination assembly of claim 1, wherein at least one of the sidewalls (35,37) of the second pair forms a second tilt angle θ with respect to the normal of the surface of the light transmitting means.

3. The illumination assembly of claim 1, wherein at least one of the sidewalls (35,37) of the second pair comprises at least two planar reflective faces (95, 95A).

4. The illumination assembly of claim 1, wherein the sidewall having at least two planar faces (31,31a) is arcuately shaped.

5. The illumination assembly of claim 1, wherein the reflecting means further comprises an array of microlenses (80), wherein the output of each microprism (90) is directed to at least one corresponding microlens (80) and the light transmitted through the microlenses (80) emerges as a substantially collimated light source.

6. The illumination assembly of claim 5, wherein the microprisms (90) and microlenses (80) are constructed from organic polymeric material.

7. The illumination assembly of claim 1, wherein the first tilt angle is ϕ between 15 and 50 degrees to the normal of the surface of the light transmitting means.

8. The illumination assembly of claim 1, wherein the second tile angle is θ between 2 and 20 degrees.

9. The illumination assembly of claim 5, wherein the microprisms (90), microlenses (80) and light transmitting means (16) have an index of refraction of between about 1.45 and about 1.65.

10. The illumination assembly of claim 9, further comprising an interstitial region between the microprisms (90) having an index of refraction less than the index of refraction of the microprisms (90).

## Patentansprüche

1. Beleuchtungsanordnung zum Bilden einer räumlich gerichteten Lichtquelle, wobei die Beleuchtungsanordnung folgendes aufweist:
ein lichtdurchlassendes Mittel (16) zum Transportieren von von einer ersten Lichtquelle (14) ausgehendem Licht und mit einer optisch an die erste Lichtquelle angekoppelten- ersten lichtaufnehmenden Fläche (17); und
ein Reflexionsmittel zum Umlenken des Lichts mit einem Array aus Mikroprismen (90), die jeweils folgendes umfassen:
eine optisch an das lichtdurchlassende Mittel (16) angekoppelte Lichteintrittsfläche (30);
eine von der Lichteintrittsfläche (30) entfernte Lichtaustrittsfläche (32) mit einem Flächeninhalt, der mindestens so groß ist wie der Flächeninhalt der Lichteintrittsfläche (30);
ein erstes Paar gegenüberliegender Seitenwände (33, 34), die zwischen der Lichteintrittsfläche (30) und der Lichtaustrittsfläche (32) angeordnet sind und mit ihnen zusammenhängen, wobei mindestens eine der Seitenwände (33, 34) bezüglich der Normalen der Fläche des lichtdurchlassenden Mittels einen ersten Neigungswinkel ϕ bildet; und
ein zweites Paar gegenüberliegender Seitenwände (35, 37), die zwischen der Lichteintrittsfläche (30) und der Lichtaustrittsfläche (32) angeordnet sind und mit ihnen zusammenhängen,
wobei das durch das lichtdurchlassende Mittel (16) reflektierte Licht in die Mikroprismen (90) durch die Lichteintrittsflächen eintritt, durch die Seitenwände (33, 34, 35, 37) umgeleitet wird und durch die Lichtaustrittsflächen (32) als räumlich gerichtete Lichtquelle austritt,
dadurch gekennzeichnet, daß die mindestens eine Seitenwand des ersten Paars mindestens zwei planare reflektierende Seiten (31, 31a) umfaßt.

2. Beleuchtungsanordnung nach Anspruch 1, wobei mindestens eine der Seitenwände (35, 37) des zweiten Paars bezüglich der Normalen der Fläche des lichtdurchlassenden Mittels einen zweiten Neigungswinkel Θ bildet.

3. Beleuchtungsanordnung nach Anspruch 1, wobei mindestens eine der Seitenwände (35, 37) des zweiten Paars mindestens zwei planare reflektierende Seiten (95, 95A) umfaßt.

4. Beleuchtungsanordnung nach Anspruch 1, wobei die Seitenwand mit den mindestens zwei planaren Seiten (31, 31a) bogenförmig ist.

5. Beleuchtungsanordnung nach Anspruch 1, wobei das reflektierende Mittel weiterhin ein Array aus Mikrolinsen (80) umfaßt, wobei die Ausgabe jedes Mikroprismas (90) auf mindestens eine entsprechende Mikrolinse (80) gerichtet ist und das durch die Mikrolinsen (80) durchgelassene Licht als im wesentlichen kollimierte Lichtquelle austritt.

6. Beleuchtungsanordnung nach Anspruch 5, wobei die Mikroprismen (90) und Mikrolinsen (80) aus organischem polymeren Material konstruiert sind.

7. Beleuchtungsanordnung nach Anspruch 1, wobei der erste Neigungswinkel ϕ zwischen 15 und 50 Grad zu der Normalen der Fläche des lichtdurchlassenden Mittels beträgt.

8. Beleuchtungsanordnung nach Anspruch 1, wobei der zweite Neigungswinkel Θ zwischen 2 und 20 Grad beträgt.

9. Beleuchtungsanordnung nach Anspruch 5, wobei die Mikroprismen (90), Mikrolinsen (80) und das lichtdurchlassende Mittel (16) einen Brechungsindex zwischen etwa 1,45 und 1,65 aufweisen.

10. Beleuchtungsanordnung nach Anspruch 9, weiterhin mit einem Zwischenbereich zwischen den Mikroprismen (90) mit einem Brechungsindex, der kleiner ist als der Brechungsindex der Mikroprismen (90).

## Revendications

1. Ensemble d'éclairage en vue de fournir une source de lumière dirigée dans l'espace, l'ensemble d'éclairage comprenant:
un moyen de transmission de lumière (16) destiné à transporter de la lumière émanant d'une première source de lumière (14) et comportant une première surface acceptant la lumière (17) optiquement couplée à la première source de lumière; et
un moyen réfléchissant destiné à rediriger la lumière et comprenant un réseau de microprismes (90) dont chacun comprend :
une surface d'entrée de lumière (30) optiquement couplée au moyen de transmission de lumière (16);
une surface de sortie de lumière (32) distante de la surface d'entrée de lumière (30) et dont l'aire est au moins égale à l'aire de la surface d'entrée de lumière (30);
une première paire de parois latérales opposées (33, 34) disposées entre et contiguës à la surface d'entrée de lumière (30) et la surface de sortie de lumière (32), l'une au moins des parois latérales (33, 34) formant un premier angle d'inclinaison ϕ par rapport à la normale de la surface du moyen de transmission de lumière; et
une deuxième paire de parois latérales inclinées opposées (35, 37) disposées entre et contiguës à la surface d'entrée de lumière (30) et la surface de sortie de lumière (32),
dans lequel la lumière se réfléchissant à travers le moyen de transmission de lumière (16) pénètre dans les microprismes (90) par les surfaces d'entrée de lumière, est redirigée par les parois latérales (33, 34, 35, 37) et émerge des surfaces de sortie de lumière (32) sous la forme d'une source de lumière dirigée dans l'espace,
caractérisé en ce que l'au moins une paroi latérale de la première paire comprend au moins deux faces réfléchissantes planes (31, 31a).

2. Ensemble d'éclairage selon la revendication 1, dans lequel l'une au moins des parois latérales (35, 37) de la deuxième paire forme un deuxième angle d'inclinaison θ par rapport à la normale de la surface du moyen de transmission de lumière.

3. Ensemble d'éclairage selon la revendication 1, dans lequel l'une au moins des parois latérales (35, 37) de la deuxième paire comprend au moins deux faces réfléchissantes planes (95, 95A).

4. Ensemble d'éclairage selon la revendication 1, dans lequel la paroi latérale présentant au moins deux faces planes (31, 31a) est de forme arquée.

5. Ensemble d'éclairage selon la revendication 1, dans lequel le moyen réfléchissant comprend en outre un réseau de microlentilles (80), la sortie de chaque microprisme (90) étant dirigée vers au moins une microlentille (80) correspondante et la lumière transmise à travers les microlentilles (80) émergeant sous la forme d'une source de lumière essentiellement collimatée.

6. Ensemble d'éclairage selon la revendication 5, dans lequel les microprismes (90) et les microlentilles (80) sont élaborés à partir de matériau polymère organique.

7. Ensemble d'éclairage selon la revendication 1, dans lequel le premier angle d'inclinaison ϕ est compris entre 15 et 50 degrés par rapport à la normale de la surface du moyen de transmission de lumière.

8. Ensemble d'éclairage selon la revendication 1, dans lequel le deuxième angle d'inclinaison θ est compris entre 2 et 20 degrés.

9. Ensemble d'éclairage selon la revendication 5, dans lequel les microprismes (90), microlentilles (80) et moyen de transmission de lumière (16) possèdent un indice de réfraction compris entre environ 1,45 et environ 1,65.

10. Ensemble d'éclairage selon la revendication 9, comprenant en outre une région interstitielle entre les microprismes (90) dont l'indice de réfraction est inférieur à l'indice de réfraction des microprismes (90).
